Europäisches Patentamt

European Patent Office

Office européen des brevets

(11) Publication number: **0 209 956 A1**

# EUROPEAN PATENT APPLICATION

(21) Application number: 86201292.9

(51) Int. Cl.⁴: **C08G 61/02 , C09J 3/00**

(22) Date of filing: 22.07.86

(30) Priority: 26.07.85 NL 8502134

(43) Date of publication of application:
28.01.87 Bulletin 87/05

(84) Designated Contracting States:
AT BE CH DE FR GB IT LI NL SE

(71) Applicant: DSM RESINS BV
Ceintuurbaan 5
NL-8022 AW Zwolle(NL)

(72) Inventor: Runavot, Yves
204, Boulevard de Cretell
F-94100 Saint Maur des Fosses(FR)
Inventor: Thiot, André
89 bis, Rue de Challiolt
F-95100 Argenteuil(FR)
Inventor: Salvetat, Jacques
27, Avenue Corot
F-78110 Le Vesinet(FR)

(74) Representative: Hoogstraten, Willem Cornelis
Roeland et al
OCTROOIBUREAU DSM Postbus 9
NL-6160 MA Geleen(NL)

(54) **Hydrogenated hydrocarbon resins and their use in adhesives and coatings.**

(57) The invention relates to hydrogenated hydrocarbon resins that are the hydrogenation products of a resinous hydrocarbon polymer based on one or more polymerizable monomers containing one or more vinyl groups and a phenolic monomer. The amount of phenolic monomer is between 1 and 25 mole % relative to the one or more polymerizable monomers containing one or more vinyl groups and that the phenolic monomer is situated substantially at the end of the polymer. These hydrocarbon resins are applied in adhesives and coatings.

## HYDROGENATED HYDROCARBON RESINS AND THEIR USE IN ADHESIVES AND COATINGS

The invention relates to hydrogenated hydrocarbon resins that are the hydrogenation products of a resinous hydrocarbon polymer based on one or more polymerizable monomers containing one or more vinyl groups and a phenolic monomer, and to their use in adhesives such as hot-melt adhesives and pressure-sensitive adhesives and coatings.

Such hydrogenated hydrocarbon resins are known from French patent application FR-A-2248309.

French patent application FR-A-2248309 describes resins on the basis of phenol, diene and olefine, which are obtained via a two-step preparation and which contain at least 28.6 mole % of a phenolic compound. In a first step a twofold excess of the phenolic compound is to react with a non-conjugated diene compound, since otherwise a product is obtained that is unsuitable for adhesive applications. This reaction product is subsequently reacted with an olefine.

This two-step preparation, however, is laborious and expensive. The present invention provides a solution to this problem.

The hydrogenated hydrocarbon resins according to the invention that are hydrogenation products of a resinous hydrocarbon copolymer based on one or more polymerizable monomers containing one or more vinyl groups and a phenolic monomer are characterized in that the amount of phenolic monomer is between 1 and 25 mole % relative to one or more polymerizable monomers containing one or more vinyl groups and in that the phenolic monomer is situated substantially at the end of the polymer.

It has been found that hydrogenation products of resinous hydrocarbon polymers on the basis of one or more polymerizable monomers containing one or more vinyl groups and on a phenolic monomer according to the invention can be prepared in a relatively simple manner and that, moreover, they possess highly desirable properties, in particular with respect to their compatibility with ethylene-vinylacetate copolymers that are often applied in hot-melt and pressure-sensitive adhesive compositions.

According to a preferred embodiment of the invention the amount of phenolic monomers is between 1 and 15 mole % relative to one or more ploymerizable monomers containing one or more vinyl groups, more in particular between 5 and 12 mole % relative to one or more polymerizable monomers containing one or more vinyl groups.

According to a further preferred embodiment of the invention the one or more polymerizable monomers containing one or more vinyl groups are one or more vinylaromatic monomers such as styrene, $\alpha$-methylstyrene, vinyltoluene and/or indene.

According to another preferred embodiment of the invention, the one or more polymerizable monomers containing one or more vinyl groups are a mixture of one or more vinylaromatic monomers and one or more non-aromatic polymerizable monomers.

The non-aromatic polymerizable monomer preferably is a diolefinic hydrocarbon, a terpenic hydrocarbon and/or a mixture consisting of diolefinic and terpenic hydrocarbons, in particular dicyclopentadiene and/or pentadiene. As pentadiene, use is preferably made of piperylene (1,3-pentadiene).

According to yet another preferred embodiment of the invention the phenolic monomer is phenol and/or mono-or di-$C_1$ $C_{12}$ alkylphenol.

The phenolic monomer reacts as chain-terminating-agent for the polymerization of the polymerizable monomers containing vinyl groups. As a result, this phenolic monomer is situated mainly at the end of the polymer chain.

The starting monomers of the hydrocarbon resin can be used in the form of technical grade compounds (purity above 95 %). Depending on the nature and reactivity some of the impurities may be built in into the resin. The non aromatic monomers may even be used a concentrates containing 60 % by weight or more of said compounds.

The resins according to the invention usually show softening points (Ring & Ball according to ASTM E 28) between about 80¤ and 130¤C. The compatibility with elastomers, such as natural and snythetic rubbers, is excellent. The average molecular weight of these resins varies between about 400 and 2.000, depending on the percentage of phenol present.

The hydrogenated hydrocarbon resins according to the invention are preferably prepared by hydrogenating a polymer, obtained by a polymerization reaction of one or more polymerizable monomers containing one or more vinyl groups with a phenolic monomer, effected as a one-step process in the presence of a Lewis acid catalyst at a temperature between -10 ¤C and 80 ¤C, hydrogenation being carried out at a pressure between 1 and 100 kg/cm², preferably between 60 and 85 kg/cm², by means of a hydrogenation catalyst at a temperature between 20¤C and 300¤C, preferably between 200¤C en 300¤C.

A one-step process is also understood to mean the addition during the reaction of part of the components.

The hydrogenationcatalyst can be chosen from the metals of Group VIII of the Periodic Table of the Elements like nickel, palladium, ruthenium, the metals of Group VI, like tungsten, chromium and molybdenum, the metals of Group VII like rhenium and manganese and copper.

Such metals can be used alone or in a combination of two or more metals.

They can also be used on a support like alumina, silica-alumina or kieselguhr or as metaloxide.

Examples of hydrogenation catalysts are nickel on kieselguhr, nickel-tungsten on alumina support, nickel-molybdenum on aluminasupport, nickeloxide, Raneynickel, palladium on aluminasupport or nickel on aluminasupport.

The starting hydrocarbon resins subjected to hydrogenation in accordance with the invention can be prepared by reacting, optionally in the presence of a hydrocarbon solvent, e.g. cyclohexane, methylcyclohexane or toluene, the desired amounts of starting materials and a small amount of a Friedel-Crafts type catalyst, for instance $BF_3$, $AlCl_3$, $TiCl_4$ or a complex thereof with e.g. ether or phenol, the reaction temperature being between 10¤ and 80¤C, preferably between 20¤ and 50¤C.

Slow addition of the catalyst -which is preferably $BF_3$ or a complex thereof-may be recommendable in view of the exothermic nature of the reaction. Special measures to control the temperature during the reaction may be required to secure satisfactory and reproducible technical results. The reaction mixture is kept for several hours at the desired reaction temperature (-10¤-80¤C), after which the catalyst is destroyed, preferably by use of a base, and washing, whereafter any volatiles, such as the solvent and unreacted starting material, are removed.

The resins according to the present invention can advantageously be used in adhesives, more particularly in hot-melt adhesives which do not require the presence of organic solvents. The compatibility of the resin with rubber is excellent (e.g. 50:50 mixtures).

In some instances elastomers like rubber and certain ethylene-vinylacetate copolymers (EVA), ethylacrylate polymers (EEA) and amorphous polypropiene (APP) can be used, either in combination or separately together with these resins in hot-melt pressure-sensitive adhesives.

The present invention also provides pressure-sensitive adhesives which are mixtures of a hydrogenated hydrocarbon resin according to the invention and an elastomer, such as natural or synthetic rubber. As natural rubber crude gum and as synthetic rubber for instance styrene butadiene styrene (SBS) or styrene isoprene styrene (SIS) block copolymers can be used.

The resins and elastomers can be combined in weight ratios of between, for instance, 0.3 and 3 parts of resin per part of rubber, preferably between 0.5 and 2. Optional further ingredients such as waxes, tackifying oils (usually a naphthenic oil) and stabilizers against oxidation and ultraviolet light can be incorporated in minor amounts. The resin and the rubber are, for instance, melted together at a temperature between about 80¤ and 200¤C and kept at this temperature for 10-30 minutes. Sometimes, better results are obtained by combining more than one type of rubber and/or more than one type of resin. The use of solvents (aliphatic or aromatic hydrocarbons, chlorinated derivatives thereof or e.g. ketones) is often superfluous, though the usual adjuncts, such as anti-oxidants, fillers and the like, may be incorporated in minor amounts.

An embodiment of the present invention provides application as hot-melt adhesive of a hydrogenated hydrocarbon resin together with an elastomer, a natural or synthetic rubber or an ethylene-vinylacetate copolymer with 25-55 % by weight of vinylacetate. Optionally, a microcrystalline wax and/or paraffin wax and/or a tackifying oil can be added.

The weight ratio between resin and ethylene-vinylacetate copolymer may vary between 35 : 65 and 60 : 40, preferably between 40 : 60 and 50 : 50. The ethylene-vinylacetate copolymer contains between 25 and 55 % by weight, preferably between 28 and 50 % by weight, of vinylacetate.

The hot-melt adhesive preferably comprises 20-60% by weight (calculated on the total composition) of a hydrogenated hydrocarbon resin according to the invention.

Mixing of the resin and the copolymer is effected in the melt at a temperature of, e.g., 150-200¤C, preferably 160-180¤C, for 15-60 minutes. Minor quantities of antioxidants may also be present. By this process hot-melt adhesives can be provided which are particularly suitable for packaging, bookbinding or the manufacture of disposables, such as diapers, sanitary towels, disposable dressings, tapes of various types such as packaging tapes, masking tapes for automobile windows, carpet-laying tapes, lables, floor tiles, wall coverings, automobile upholstery, etc.

The non-pressure-sensitive hot melt adhesives as formulated herein are characterized by superior adhesion, good colour properties, hot and cold resistance and stability and as such are suitable for packaging, bookbinding and non-pressure-sensitive disposables applications.

The resins according to the present invention can also advantageously be used in coatings. A preferred embodiment of the invention provides in coatings that consist of

3-15 % by weight, preferably 5-10 % by weight hydrogenated hydrocarbon resin according to the invention,

2-10 % by weight, preferably 4-6 % by weight, ethylene-vinylacetate copolymer and

75-95 % by weight wax, for instance paraffine wax.

The usual additives can be added.

The ethylene-vinylacetate copolymer can be replaced by other polymers, as long as they result in coatings with the same performance.

The invention is illustrated by the following Examples.

Example 1

60 parts by weight syrene, 30 parts by weight alphamethyl-styrene and 10 parts by weight phenol are mixed at 20¤C and 0,25 % by weight BF₃ as catalyst in the presence of 120 parts by weight cyclohexane. The reaction mixture is kept at 20¤C for 5 hours.

After neutralizing the caralyst, filtering and distilling the solvent, the molten resin is introduced into an autoclave while hydrogen is introduced, in the presence of a hydrogenation catalyst, at a pressure of 80 kg/cm² and a temperature of 290¤C.

The obtained hydrogenated resin is 'water white' (the colour on the Gardner scale is lower than 1) and has a Ring and Ball softening point of 80¤C.

This hydrogenated resin has an excellent compatability with EVA and with naturtal and synthetic rubber (in a weight ratio hydrogenated resin to EVA and rubber of 50 : 50) for applying in hot-melt and pressure-sensitive adhesive compositions.

After treating with UV-light this colour on the Gardner scale is 1 (yellow).

Comparative example 1

The same resin as in Example 1 is prepared without hydrogenation.

The resin obtained has a Ring and Ball softening point of 100¤C and is 'water white' (the colour on the Gardner scale is lower than 1).

The compatibility with SIS-rubber is only medium whereas the compatibility with EVA is bad. The colour on the Gardner scale is 7 (green) after treating with UV-light.

Example II

At 20¤C, 37.2 parts by weight of styrene, 20 parts by weight of α-methylstyrene, and 32,8 parts by weight of piperylene are mixed with 10 parts by weight of phenol and with 0,25 % by weight of BF₃ as catalyst in the presence of 120 parts by weight of toluene.

The reaction mixture is kept at 20¤C for 5 hours.

After neutralizing the catalyst, filtering and distilling the solvent, the molten resin is introduced into an autoclave while hydrogen is introduced, in the presence of a hydrogenation catalyst, at a pressure of 80 kg/cm² and a temperature of 290¤C.

The obtained hydrogenated resins are 'water white' (colour on the Gardner scale lower than 1) and they have a Ring and Ball softening point of 100. This hydrogenated resins have excellent compatibility with SIS and SBS rubbers and EVA.

Example III

Use is made of the same procedure as described in Example I, except that the hydrogenation is carried out using the solution resulting from the polymerization step, without prior distillation of the solvent. After filtering and distilling, a resin is obtained having a Ring and Ball softening point of 80¤C, a colour on the Gardner scale lower than 1 and an excellent compatibility with EVA and natural and synthetic rubbers for the formulation of hot melt adhesives, pressure sensitive adhesives and coatings.

Comparative Example 2

The same resin as in Example II is prepared without hydrogenation step.

The resin obtained has a Ring and Ball softening point of 100¤C, and a colour on the Gardner scale lower than 1.

The compatibility with SIS and SBS rubbers is only medium.

## Claims

1. Hydrogenated hydrocarbon resins that are the hydrogenation products of a resinous hydrocarbon polymer based on one or more polymerizable monomers containing one or more vinyl groups and a phenolic monomer, characterized in that the amount of phenolic monomer is between 1 and 25 mole % relative to the one or more polymerizable monomers containing one or more vinyl groups and that the phenolic monomer is situated substantially at the end of the polymer.

2. Hydrogenated hydrocarbon resins according to claim 1, characterized in that the amount of phenolic resin is between 5 and 12 mole % relative to the one or more polymerizable monomers containing one or more vinyl groups.

3. Hydrogenated hydrocarbon resins according to any of claims 1-2, characterized in that the one or more polymerizable monomers containing one or more vinyl groups are one or more vinylaromatic monomers.

4. Hydrogenated hydrocarbon resins according to any of claims 1-2, characterized in that the one or more polymerizable monomers containing one or more vinyl groups are a mixture of one or more vinylaromatic monomers and one or more non-aromatic polymerizable monomers.

5. Hydrogenated hydrocarbon resins according to any of claims 1-2, characterized in that the phenolic monomer is phenol and/or mono-or di-$C_1$-$C_{12}$ alkylphenol.

6. Hydrogenated hydrocarbon resins according to any of claims 3 and 4, characterized in that the vinylaromatic monomer is styrene, $\alpha$-methyl-styrene, vinyltoluene and/or indene.

7. Hydrogenated hydrocarbon resins according to claim 4, characterized in that the non-aromatic copolymerizable monomer is a diolefinic hydrocarbon, a terpenic hydrocarbon or a mixture containing diolefinic and/or terpenic hydrocarbons.

8. Process for the preparation of hydrogenated hydrocarbon resins, characterized in that a polymer, obtained by a polymerization reaction of one or more polymerizable monomers containing one or more vinyl groups with a phenolic monomer, effected as a one step process in the presence of a Lewis acid catalyst at a temperature between -10ºC and 80ºC, is hydrogenated at a pressure between 1 and 100 kg/cm² by means of a hydrogenation catalyst at a temperature between 20ºC and 300ºC.

9. Application of a hydrogenated hydrocarbon resin according to any of claims 1-7 or obtained by the process according to claim 8, together with an elastomer, a natural or synthetic rubber or an ethylene-vinylacetate copolymer with 25-55 % by weight of vinylacetate, as hot-melt adhesive.

10. Hot-melt adhesive, characterized in that it comprises 20-60 % by weight (calculated on the total composition) of a hydrogenated hydrocarbon resin according to any of claims 1-7 or obtained by the process according to claim 8.

11. Coating, characterized in that it consists to 3-15 % by weight, calculated on the total composition, of a hydrogenated hydrocarbon resin composition according to any of claims 1-7, or a hydrogenated hydrocarbon resin obtained by the process according to claim 8, 2-10 % by weight ethylene-vinylacetate copolymer and 75-95 % by weight wax.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | FR-A-2 248 309 (MINNESOTA MINING) <br> * Claims 1-7; page 4, line 24 - page 6, line 14 * | 1-11 | C 08 G 61/02 <br> C 09 J 3/00 |
| Y | FR-A-1 380 527 (HOECHST) <br> * Abstract; page 2, column 2, paragraph 3 * | 1-11 | |
| Y | EP-A-0 109 694 (RÜTGERSWERKE) <br> * Claims 1-6 * | 1-11 | |

TECHNICAL FIELDS
SEARCHED (Int. Cl.4)

C 08 G
C 08 F

The present search report has been drawn up for all claims

| Place of search | Date of completion of the search | Examiner |
|---|---|---|
| THE HAGUE | 20-10-1986 | PERMENTIER W.A. |